# EUROPEAN PATENT APPLICATION

(11) **EP 2 099 207 A1**
(43) Date of publication of application: **09.09.2009**
(21) Application number: 09154151.6
(22) Date of filing: 02.03.2009
(51) Int. Cl.: H04M 3/42, H04M 3/58

(54) **Method and device for call back and call forwarding**

(30) Priority: 06.03.2008 GB 0804152
(71) Applicant: Lindsay, Graham, 46 Burdiehouse Drive Edinburgh Lothian EH17 8BA (GB)
(72) Inventor: Lindsay, Graham, 46 Burdiehouse Drive Edinburgh Lothian EH17 8BA (GB)
(74) Representative: McBride, Peter Hill

(57) **Abstract**

A call bridging device sets up a three way call between the device and two telephones. The call is initiated by the call bridging device in response to a signal transmitted from a first telephone, such that the charges for the call are made to the telephone account associated with the call bridging device, instead of the telephone account associated with the first telephone.

## Description

This invention relates to improvements in or relating to telecommunications (introducing the CALL STAR COMMUNICATOR^{™} device), and in particular to the routing of telephone calls.

In the field of telecommunications, telephone exchanges are used to connect callers through a circuit to allow communication between the callers. Operators of telephone services gain competitive advantage by offering
customers discounted rates, even free phone calls to certain destinations, for example local destinations, or at certain times, for example evenings and weekends.

Mobile telephones offer the advantage of making calls from a location that is not fixed, however the high costs of mobile network infrastructure installation and maintenance means that typically mobile telephone call costs are higher than those from a fixed land line. Although many mobile telephone services offer many free minutes of even national calls, this is paid for by a high monthly subscription charge.

Telephones in hotels or public payphones are also convenient for users away from their home or office, but call costs are also higher than from residential lines.

In order to take advantage of lower call rates from fixed residential land lines, while keeping the mobility advantages of mobile telephones, apparatus is known to provide call bridging functionality. US Patent No 6128375 granted to Punzalan et al describes a stand alone apparatus that provides remote control of custom calling services, including call bridging. The apparatus enables, for example, users to charge their personal calls to their residential phone when away from their home residence. The apparatus is connected to the analogue two-wire subscriber loop interface from the local telephone carrier at the home residence. Using standard subscriber line signalling and standard DTMF (Dual Tone Multi-Frequency) and a pre-programmed micro controller, a user is able to dial their home telephone, program the apparatus, such that the apparatus initiates a three-way call from the land line at the home to a third destination. The call is charged to the account of the home telephone number. In this way, a mobile telephone user or a user in a hotel can call their home phone number and make even an international call using the discounted or lower standard rates from their home telephone number account.

The problem with the invention described in US Patent No 6128375 is that it relies on United States telephone services that permit the receiver of a call to initiate a three-way call and the receiver of a call is charged for the second leg to the third destination. In for example the United Kingdom, typically in residential phone services, three-way calling can only be set up and charged to the initiator of the original call. In the case of a mobile telephone call to a home number, which is then bridged to a long distance or international destination using a three-way call set-up, the entire call would be charged to the mobile telephone user account, thereby missing the advantages afforded to the user of a bridging device in the United States.

US Patent No 6038291 assigned to Lucent Technologies Inc, Murray Hill, N.J. describes call forwarding via a 2-line phone. A multi-line telephone has a first line for incoming calls and a second line configured to place outgoing calls based on the incoming calls and also configured to receive programming calls for user instructions relating to the telephone number of outgoing calls. The problem with this invention is that it requires two telephone lines.

It would be advantageous to provide a call bridging device, which is a single unit that can be easily and remotely programmed by a user, to bridge calls that are charged to the account of a single line for use with United Kingdom type telephone systems.

It is an object of the present invention to provide call bridging to users where the calls are charged to the account of the line where the bridging device is connected for use with United Kingdom type telephone systems (a "United Kingdom" type telephone system is defined as one in which continuing three-way calls cannot be set-up by the receiver of a call. It is to be appreciated that telephone systems of this type are not found exclusively in the United Kingdom, but that they also are in place across Europe and beyond).

According to a first aspect of the present invention, there is provided a method for call bridging in a telephone system in which continuing three-way calls
cannot be set-up by the receiver of a call, comprising the steps of:
- signalling from a first telephone set to a call bridge device;
- establishing a first call between the call bridge device and the first telephone set;
- the call bridge device setting up a three-way call;
- establishing a second call at the call bridge device between the call bridge and a second telephone set, such that a telephone connection is provided between the first telephone set and the second telephone set; and
- optionally the call bridge device hanging up after establishing the first and second calls.
**characterised in that** the step of establishing a first call is performed by the call bridge device.

Preferably the first and second calls are charged to the telephone number account of the call bridge device.

Preferably said step of signalling comprises the steps of:
- establishing a call at said first telephone set between first said first telephone set and said call bridge device;
- optionally verifying the authorisation of said first telephone set; and
- optionally selecting the number of said second telephone set.

Alternatively said step of signalling comprises the step of said first telephone set calling said call bridge device, but hanging up before the call is answered.

Optionally said step of establishing the first call further comprises the steps of:
- optionally verifying the authorisation of said first telephone set; and
- optionally selecting the number of said second telephone set.

Typically said step of verifying the authorisation of said first telephone set uses caller line identification.

Alternatively said step of verifying the authorisation of said first telephone set uses a code number entered into the keypad of said first telephone set.

Alternatively said step of verifying the authorisation of said first telephone set uses recognition of voice input to said first telephone set.

Optionally said step of signalling from a first telephone set to a call bridge device comprises a signal to disable the call bridging function, thereby not performing the remaining said steps.

Alternatively said step of establishing a first call further comprises the step of responding to a signal to disable the call bridging function, thereby not performing the remaining said steps.

Preferably said network is at least partially comprised of VOIP components and/or broadband internet connection components.

According to a second aspect of the present invention, there is provided a device for call bridging in a telephone system in which continuing three-way calls cannot be set up by the receiver of a call, comprising:
a signal generation means for setting up three-way calls and establishing and ending calls;
   - a signal detector means for detecting and processing inputs from a user;
   - a verification means for verifying the authority of callers to make bridged calls; and
   - a connection means for connecting to a telephone network; and
**characterised in that** the device is adapted to establish a three-way call responsive to a signalling call from a first telephone set.

Preferably said signalling call is ended before initiation of said three-way call.

Preferably said three-way call is initiated by said device.

Preferably said three-way call connects to said first telephone set.

Preferably said three-way call connects to a second telephone set.

Preferably said device is adapted for verifying the authorisation of said first telephone set.

Preferably said step of verifying is according to the first aspect of the present invention.

Preferably said device is adapted to select the number of said telephone set.

Preferably said network is at least partially comprised of VOIP components and/or broadband internet connection components.

In order to provide a better understanding of the present invention, an embodiment will now be described by way of example only and with reference to the accompanying Figures, in which:
Figure 1 illustrates in schematic form telephone sets and a call bridging device connected via a telephone network; and
Figure 2 illustrates a call bridging device.

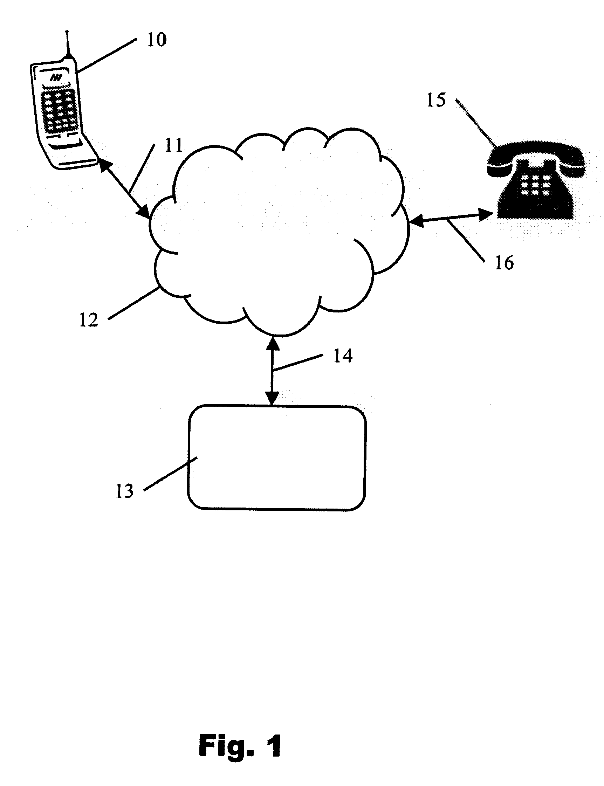

The invention is a telecommunications device that functions to connect two telephone sets, such that the calls are charged to the telephone line account of the line connected to the call bridging device. With reference to Figure 1, a first telephone handset 10 is connected 11 to a telephone network 12. A call bridging device 13 is connected 14 to the telephone network. A second telephone set 15 is connected 16 to the telephone network. In this example, the first telephone set 10 is a mobile telephone, but other types of telephone sets may be used, and the call bridging device 13 is at the home residence of the owner of the mobile telephone. The user could directly use the telephone network to call the second telephone set, but would prefer to take advantage of lower call rates from their home telephone line.

It is to be appreciated that the network 12 may comprise a PSTN network, a wireless network such as GSM or its equivalents, a VOIP/broadband network, or a composite network comprising any combination of PSTN, wireless and VOIP/broadband networks. The connections illustrated at 11, 14 and 16 may take any form suitable for interface with devices compatible with any of these networks. For example, the first telephone handset 10 could be connected 11 to the network 12 via a wireless GSM connection and the second telephone set 15 could be connected 16 to the network 12 by a PSTN connection. In other examples, either of the telephone handsets 10, 15 could be VOIP enabled devices, using VOIP software such as that provided by Skype^{™} for example. It is to be appreciated that any combination of technologies may be used in enabling and establishing the connection between any given telephone sets and the call bridge device.

Firstly, the user calls his or her home number from the mobile telephone. The call bridging device answers the call and announces a message, giving the options of:
1. recording voice messages in the same way as a conventional answer phone;
2. playing messages already recorded by the device; or
3. making a bridged call.

Options 2 and 3 above may be not announced by default, but only announced after the user enters a sequence of one or more key presses during the announcement of the first option.

The call bridging device uses caller line identification to determine the mobile telephone number and compares this to a list of authorised telephone numbers in its memory. If the call bridge option has been selected and the mobile telephone number is not verified as authorised, then the call bridging device announces an error message. Optionally at this stage the user is prompted to enter the telephone number of the destination using the keypad on their mobile handset. The prompt may be a dial tone or a recorded or generated voice prompt.

Next, the call bridge device ends the call to the mobile telephone and sets up a three-way call. Using a British Telecom digital exchange, this is achieved by first the call bridge device calling the mobile telephone. After the user answers the mobile telephone, the call bridge device announces that the bridged call is being set-up. Next, the call bridge device issues a recall signal then dials the destination second telephone set number. When an answer is received from the second telephone set, the call bridge device transmits a tone for the number three to start the open three-way call. This allows the user with the mobile telephone handset to talk to the person at the second telephone set, while the call bridge device remains silent.

At the end of the call, the call bridge device detects that either the first or the second handset has been hung up and the call bridge device ends the three-way call by itself hanging up. Optionally the call bridge device may hang up before either the first or the second telephone sets then, if supported by the network, the first and second telephone sets will remain connected while the call bridge device is disconnected. Both the first and the second calls are charged to the telephone number account of the line of the call bridge device.

As an alternative to the call bridge device prompting for and the user entering the destination telephone number during the signalling call, this number may be prompted for and entered after the signalling call is ended and during the first call, where call bridge device has called the mobile telephone back.

Instead of verifying the authorisation of the mobile telephone number using caller line identification, the user may be prompted at the mobile telephone to enter a PIN (Personal Identification Number) code into the keypad. Alternatively the verification may use voice recognition of a word or a phrase from the user. Other methods of verification are not excluded, such as biometric verification.

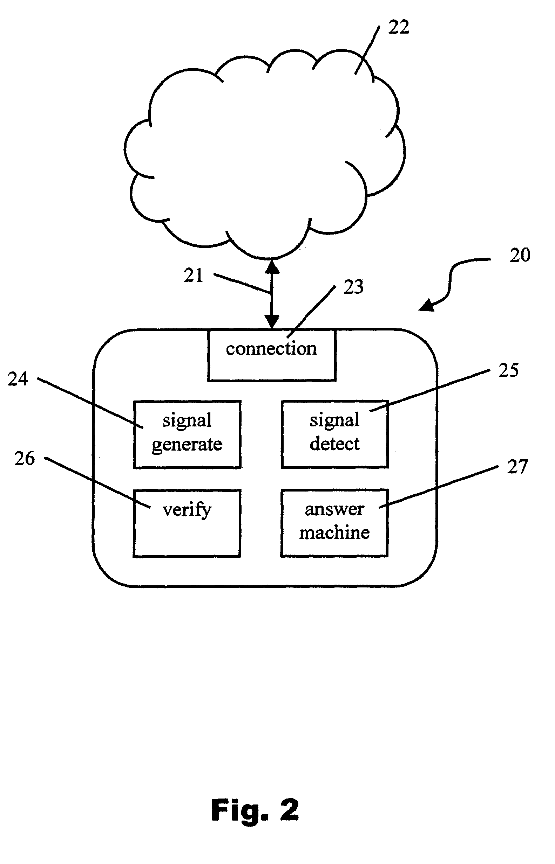

With reference to Figure 2, a call bridge device 20 is shown schematically connected 21 to a telephone network 22 by a connection means 23. The call bridge device also comprises a signal generation means 24 for setting up three-way calls and establishing and ending calls. The signal detector means 25 is used to gather inputs from the user, for example inputting a PIN number or a destination telephone number or selecting functions provided by the device. Finally, a verification means 26 is provided for verifying the authority of callers, in order to prevent unauthorised users from making bridged calls. The memory in the verification means that stores authorised users may be programmed, for example, by a keyboard on the device or by remote programming through a password protected menu system in a way similar to remote access of digital answering machines. Optionally the device may include a telephone answering machine module 27.

It is to be appreciated that the network 22 may comprise a PSTN network, a wireless network such as GSM or its equivalents, a VOIP/broadband network, or a composite network comprising any combination of PSTN, wireless and VOIP/broadband networks. The connection illustrated at 21 may take any form suitable for interface with devices compatible with any of these networks. It is to be appreciated that any combination of technologies may be used in enabling and establishing the connection between any given telephone sets and the call bridge device.

Various improvements and modifications may be made to the above without departing from the scope of the invention.

## Claims

1. A method for call bridging in a telephone system in which continuing three-way calls cannot be set-up by the receiver of a call, comprising the steps of:
signalling from a first telephone set to a call bridge device; establishing a first call between the call bridge device and the first telephone set;
the call bridge device setting up a three-way call;
establishing a second call at the call bridge device between the call bridge and a second telephone set, such that a telephone connection is provided between the first telephone set and the second telephone set; and
optionally the call bridge device hanging up after establishing the first and second calls;
**characterised in that:**
the step of establishing a first call is performed by the call bridge device.

2. The method of claim 1, wherein the first and second calls are charged to the telephone number account of the call bridge device.

3. The method of claim 1 or claim 2 wherein said step of signalling comprises the steps of:
establishing a call at said first telephone set between first said first telephone set and said call bridge device;
optionally verifying the authorisation of said first telephone set; and
optionally selecting the number of said second telephone set.

4. The method of claim 1 or claim 2 wherein said step of signalling comprises the step of said first telephone set calling said call bridge device, but hanging up before the call is answered.

5. The method of any preceding claim, wherein said step of establishing the first call further comprises the steps of:
optionally verifying the authorisation of said first telephone set; and
optionally selecting the number of said second telephone set.

6. The method of claim 5, wherein said step of verifying the authorisation of said first telephone set uses caller line identification.

7. The method of claim 5, wherein said step of verifying the authorisation of said first telephone set uses a code number entered into the keypad of said first telephone set.

8. The method of claim 5, wherein said step of verifying the authorisation of said first telephone set uses recognition of voice input to said first telephone set.

9. The method of any preceding claim, wherein said step of signalling from a first telephone set to a call bridge device comprises a signal to disable the call bridging function, thereby not performing the remaining said steps.

10. The method of any of claims 1 to 8, wherein said step of establishing a first call further comprises the step of responding to a signal to disable the call bridging function, thereby not performing the remaining said steps.

11. A device for call bridging in a telephone system in which continuing three-way calls cannot be set up by the receiver of a call, comprising:
a signal generation means for setting up three-way calls and establishing and ending calls;
a signal detector means for detecting and processing inputs from a user;
a verification means for verifying the authority of callers to make bridged calls; and
a connection means for connecting to a telephone network; and
**characterised in that:**
the device is adapted to establish a three-way call responsive to a signalling call from a first telephone set.

12. The device of claim 11, wherein said three-way call connects to said first telephone set and to a second telephone set.

13. The device of claim 11 or claim 12, wherein said device is adapted for performing the step of verifying the authorisation of said first telephone set.

14. The device of claim 13, wherein said verifying uses any one of: caller line identification; a code number entered into the keypad of said first telephone set; or recognition of voice input to said first telephone set.

15. The device of any of claims 11 to 14, wherein said device is adapted to select the number of said telephone set.
